# EUROPEAN PATENT APPLICATION

(11) **EP 2 249 423 A1**
(43) Date of publication of application: **10.11.2010**
(21) Application number: 09812870.5
(22) Date of filing: 08.09.2009
(51) Int. Cl.: H01M 8/04, H01M 8/10

(54) **METHOD FOR CONTROLLING THE FLOW RATE OF FUEL SUPPLIED TO A FUEL CELL, FUEL SUPPLY DEVICE, AND FUEL CELL SYSTEM USING THE SAME**

(30) Priority: 11.09.2008 JP 2008233201
(71) Applicant: Panasonic Corporation, Kadoma-shi Osaka 571-8501 (JP)
(72) Inventor: MITSUI, Masaki, 1-61, Shiromi 2-chome, Chuo-ku, Osaksa-shi, Osaka, 540-6207 (JP); KIMURA, Tadao, 1-61, Shiromi 2-chome, Chuo-ku, Osaksa-shi, Osaka, 540-6207 (JP); KOZU, Katsumi, 1-61, Shiromi 2-chome, Chuo-ku, Osaksa-shi, Osaka, 540-6207 (JP)
(74) Representative: Schwabe - Sandmair - Marx
(86) International application number: PCT/JP2009/004428
(87) International publication number: WO 2010/029721

(57) **Abstract**

In a method for controlling a flow rate of fuel supplied to a fuel cell, a voltage change is examined while the flow rate of the fuel is increased step by step in a state in which a constant current is output. Conversely, when the voltage change becomes small, the flow rate of fuel is reduced step by step. When the voltage change becomes large, the flow rate of the fuel in the previous step is employed. Thus, the flow rate of fuel can be optimized in accordance with an operating state of the fuel cell.

## Description

### TECHNICAL FIELD

The present invention relates to a fuel cell system, and, in particular, to a method for controlling a flow rate of fuel supplied to a fuel cell, and a fuel supply device for carrying out the same.

### BACKGROUND ART

Recently, with the rapid widespread of portable and cordless electronic devices, as driving power sources for such devices, small and lightweight secondary batteries with large energy density have been increasingly demanded. Furthermore, technology development has been accelerated in not only secondary batteries used for small consumer goods but also large secondary batteries for electric power storages and electric vehicles, and the like, which require long-time durability and safety. Still further, much attention has been paid to fuel cells capable of being used continuously for a long time with fuel supplied, rather than secondary batteries that need charging.

A fuel cell system includes a fuel cell stack including a cell stack, a fuel supply section for supplying fuel to the cell stack, and an oxidizing agent supplying section for supplying an oxidizing agent to the cell stack. The cell stack is formed by laminating membrane electrode assemblies and separators, and disposing an endplate on each of the both end sides in the laminating direction. The membrane electrode assembly includes an anode electrode, a cathode electrode, and an electrolyte membrane interposed between the anode and cathode electrodes.

When an electric current value is constant, a voltage output from a fuel cell stack changes depending upon the flow rate of fuel supplied from a fuel supply section. A voltage increases according to the increase of the flow rate of fuel to a predetermined value. However, when the flow rate of fuel is increased beyond the predetermined value, a voltage does not increase. This is because there is an upper limit of diffusion of fuel in an anode electrode. Therefore, when fuel is supplied at a flow rate beyond the predetermined value, fuel loss is increased. Such a property of a fuel cell stack is disclosed in, for example, Patent Document 1. Therefore, by supplying fuel to a fuel cell stack at a flow rate that is not higher than a preset flow rate, usage efficiency of fuel can be increased.

However, a temperature of a fuel cell stack changes depending upon the operation states. Furthermore, due to a long-term operation, the fuel cell stack is gradually deteriorated. Due to such changes, the optimum value of the usage efficiency of fuel changes. Therefore, even when the flow rate of fuel is made to be constant, the usage efficiency of fuel cannot be optimized.

### Citation list

### Patent Literature

Patent Document 1: Japanese Patent Unexamined Publication No. 2006-073379

### SUMMARY OF THE INVENTION

The present invention relates to a method and a fuel supply device for optimizing usage efficiency of fuel in a fuel cell, and a fuel cell system using the same. A method for controlling a flow rate of fuel supplied to a fuel cell in accordance with the present invention includes the following steps:
A) making an electric current output from the fuel cell constant;
B) supplying the fuel to the fuel cell at first flow rate Q₁, and measuring voltage V₁ in the state;
C) increasing the flow rate of the fuel by predetermined change amount X from first flow rate Q₁, measuring voltage V₂ in the state, and calculating voltage change ΔV_{X};
D) carrying out an operation of the C step n times repeatedly until voltage change ΔV_{X} becomes not more than predetermined change amount a to make the flow rate of the fuel be second flow rate Q₁ + nX, and measuring voltage V₃ in the state;
E) reducing the flow rate of the fuel by predetermined change amount Y from second flow rate Q₁ + nX, measuring voltage V₄ in the state, and calculating voltage change ΔV_{Y};
F) carrying out an operation of the E step m times repeatedly until an absolute value of voltage change ΔV_{Y} exceeds predetermined change amount b to reduce the flow rate of the fuel to third flow rate Q₁ + nX - mY; and
G) supplying the fuel to the fuel cell at fourth flow rate Q₁ + nX - (m-1)Y that is increased by predetermined change amount Y from the state of the F.

In this way, by obtaining an optimum point of the usage efficiency of fuel in real time at any time, the usage efficiency of fuel can be optimized according to the change of properties of a fuel cell. According to the present invention, by supplying fuel to the fuel cell at such a flow rate (fourth flow rate), the fuel cell can be operated in a state in which the usage efficiency of fuel is maximized.

Furthermore, the fuel supply device of the present invention includes a fuel pump, a flow rate controller, a voltage measurement section, and a main controller. The flow rate controller controls a flow rate of fuel supplied from the fuel pump to the fuel cell. The voltage measurement section measures a voltage of the fuel cell. The main controller keeps an electric current output from the fuel cell constant, and controls the flow rate controller based on a voltage output from the voltage measurement section. Specifically, the main controller controls the flow rate controller along the contents from the above B step to G step.

### BRIEF DESCRIPTION OF THE DRAWINGS

Fig. 1 is a block diagram showing a configuration of a fuel cell system in accordance with an exemplary embodiment of the present invention.
Fig. 2 is a conceptual sectional view showing a schematic configuration of a principal part of a fuel cell stack to be used in a fuel cell system in accordance with an exemplary embodiment of the present invention.
Fig. 3 is a flowchart illustrating a method for controlling a flow rate of fuel in accordance with an exemplary embodiment of the present invention.
Fig. 4 is a flowchart illustrating a method for controlling the flow rate of fuel continuing the flow chart of Fig. 3 in accordance with an exemplary embodiment of the present invention.
Fig. 5 is a graph showing a relation between a flow rate of fuel and an output voltage of a fuel cell stack.
Fig. 6 is a perspective view showing a fuel cell stack in accordance with an exemplary embodiment of the present invention.
Fig. 7 is a perspective view illustrating a connection between a fuel cell stack and a fuel pump in accordance with an exemplary embodiment of the present invention.

### DETAILED DESCRIPTION OF THE PREFERRED EMBODIMENT

Hereinafter, the exemplary embodiment of the present invention is described with reference to drawings in which a direct methanol fuel cell (DMFC) is used as an example. Note here that the present invention is not necessarily limited to the embodiment mentioned below as long as it is based on the basic features described in the description.

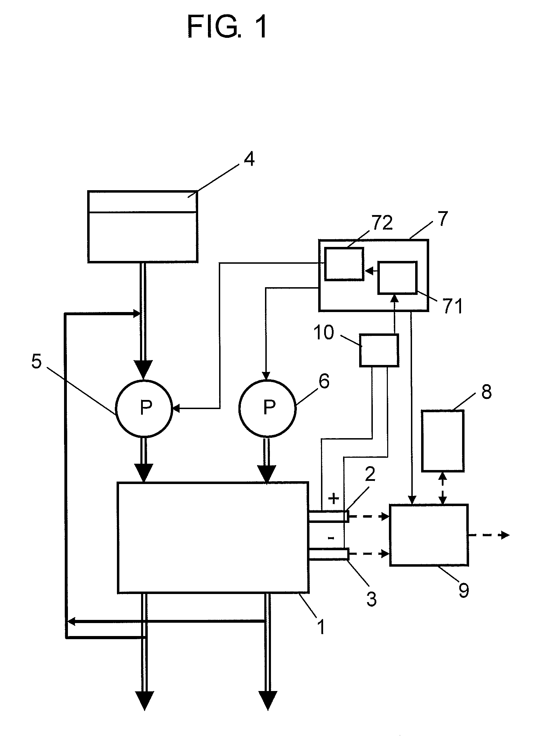

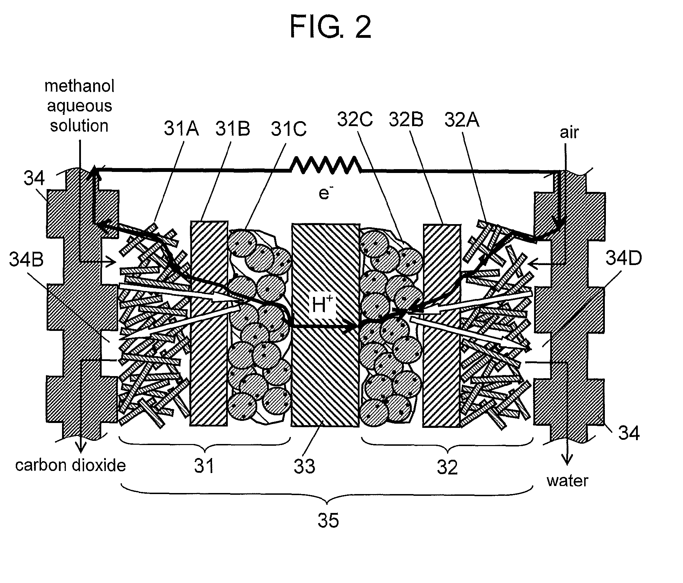

Fig. 1 is a block diagram showing a configuration of a fuel cell system in accordance with an exemplary embodiment of the present invention. Fig. 2 is a conceptual sectional view showing a schematic configuration of a principal part of a fuel cell stack to be used in a fuel cell system in accordance with an exemplary embodiment of the present invention.

The fuel cell system includes fuel cell stack 1, fuel tank 4, fuel pump 5, air pump 6, controller 7, storage section 8, DC/DC converter 9, and voltage measurement section 10. Fuel cell stack 1 has membrane electrode assembly (MEA) 35 that is an electricity generation section. Generated electric power is output from cathode terminal 2 as positive-electrode and anode terminal 3 as negative-electrode. The output electric power is input into DC/DC converter 9. Furthermore, DC/DC converter 9 has a function of adjusting an electric current value output from fuel cell stack 1. Fuel pump 5 supplies fuel in fuel tank 4 to anode electrode 31 of fuel cell stack 1. Air pump 6 supplies an air including oxygen as an oxidizing agent to cathode electrode 32 of fuel cell stack 1. Controller 7 controls the driving of fuel pump 5 and air pump 6 and controls DC/DC converter 9 to control the output to the outside and the charge and discharge to storage section 8. Note here that controller 7 includes main controller 71 and flow rate controller 72. Flow rate controller 72 controls a flow rate of fuel to be supplied from fuel pump 5 to fuel cell stack 1. Voltage measurement section 10 measures a voltage between cathode terminal 2 and anode terminal 3 of fuel cell stack 1. Main controller 71 keeps an electric current output from fuel cell stack 1 constant, and controls flow rate controller 72 based on the output voltage from voltage measurement section 10.

Fuel tank 4, fuel pump 5 and controller 7 constitute a fuel supply device for supplying fuel to anode electrode 31 in fuel cell stack 1. On the other hand, air pump 6 and controller 7 constitute an oxidizing agent supply device for supplying an air as a gas containing oxygen, that is, an oxidizing agent to cathode electrode 32 in fuel cell stack 1. Note here that the fuel supply device and the oxidizing agent supply device are not particularly limited to the above-mentioned configuration.

Meanwhile, controller 7 includes main controller 71 and flow rate controller 72, and DC/DC converter 9 and voltage measurement section 10 are provided separately in Fig. 1. However, all of them may be formed separately or may be formed as one unit.

As shown in Fig. 2, anode electrode 31 is supplied with a methanol aqueous solution as fuel, and cathode electrode 32 is supplied with air. MEA 35 is configured by laminating anode electrode 31, cathode electrode 32, and electrolyte membrane 33 interposed between anode electrode 31 and cathode electrode 32.

Anode electrode 31 includes diffusion layer 31A, microporous layer (MPL) 31B and catalyst layer 31C, which are laminated sequentially from the separator 34 side. Cathode electrode 32 also includes diffusion layer 32A, microporous layer (MPL) 32B and catalyst layer 32C, which are laminated sequentially from the separator 34 side. Cathode terminal 2 is electrically connected to cathode electrode 32, and anode terminal 3 is electrically connected to anode electrode 31, respectively. Diffusion layers 31A and 32A are made of, for example, carbon paper, carbon felt, carbon cloth, and the like. MPLs 31B and 32B are made of, for example, polytetrafluoroethylene or a tetrafluoroethylene - hexafluoropropylene copolymer, and carbon. Catalyst layers 31C and 32C are formed by highly diffusing a catalyst such as platinum and ruthenium suitable for each electrode reaction onto a carbon surface and by binding this catalyst with a binder. Electrolyte membrane 33 is formed of an ion-exchange membrane, for example, a perfluorosulfonic acid - tetrafluoroethylene copolymer, which a hydrogen ion permeates.

Next, an operation of fuel cell stack 1 is briefly described. As shown in Figs. 1 and 2, anode electrode 31 is supplied with an aqueous solution containing methanol by fuel pump 5. On the other hand, cathode electrode 32 is supplied with air pressurized by air pump 6. A methanol aqueous solution as the fuel supplied to anode electrode 31, and methanol and water vapor derived from the methanol aqueous solution are diffused in the entire surface of MPL 31B via diffusion layer 31A, and then they pass through MPL 31B and reach catalyst layer 31C.

On the other hand, oxygen contained in the air supplied to cathode electrode 32 is diffused in the entire surface of MPL 32B via diffusion layer 32A. The oxygen further passes through MPL 32B and reaches catalyst layer 32C. The methanol that reaches catalyst layer 31C reacts as in formula (1), and the oxygen that reaches catalyst layer 32C reacts as in formula (2).

CH₃OH + H₂O → CO₂ + 6H⁺ + 6e⁻ (1)

3/2O₂ + 6H⁺ + 6e⁻ → 3H₂O (2)

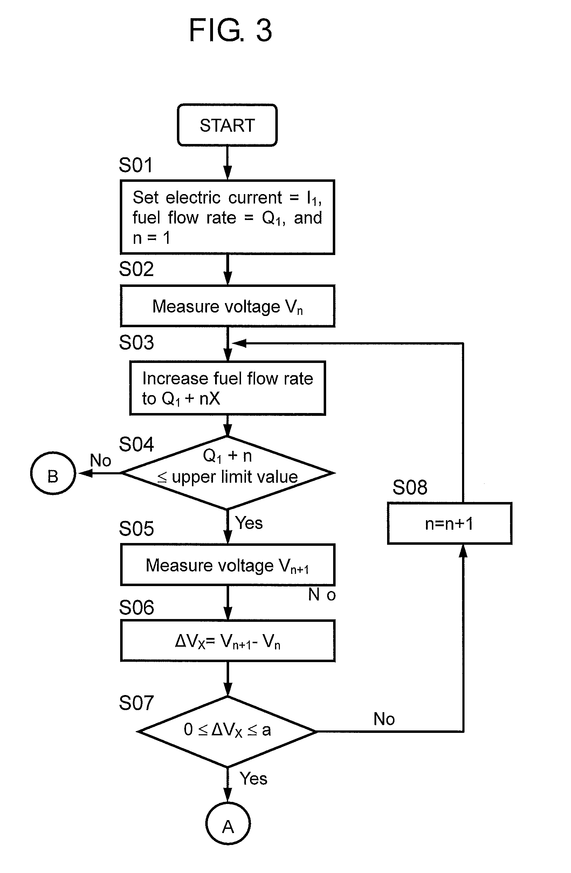

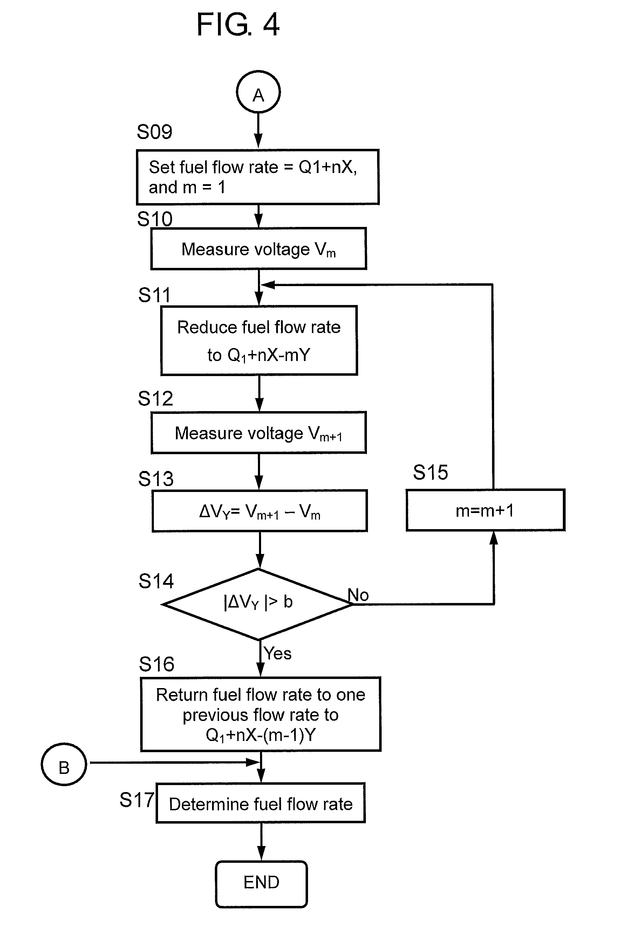

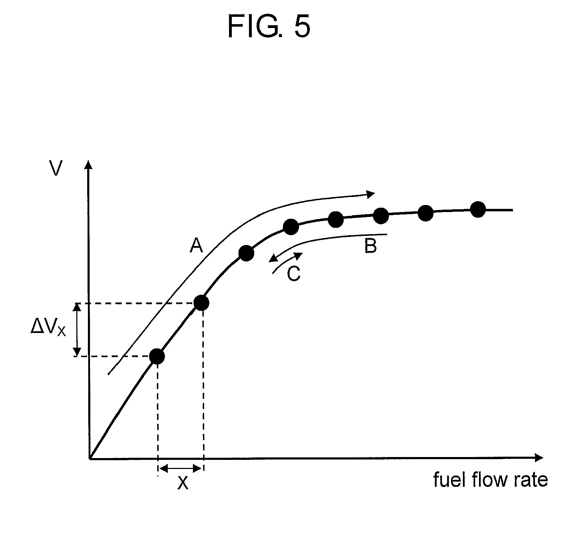

Next, controlling for maximizing the usage efficiency of fuel by optimizing a flow rate supplied to fuel cell stack 1 from fuel pump 5 is described with reference to Figs. 3 to 5. Figs. 3 and 4 are flowcharts illustrating a method for controlling a fuel flow rate in accordance with the exemplary embodiment of the present, and Fig. 5 is a graph showing a relation between a fuel flow rate and an output voltage of fuel cell stack 1. Note here that the term "flow rate" in the following description denotes a flow rate per unit time.

Firstly, main controller 71 controls flow rate controller 72 to supply fuel to fuel cell stack 1 at first flow rate Q₁ and makes an electric current output from fuel cell stack 1 via DC/DC converter 9 be a predetermined value (I₁). Furthermore, main controller 71 makes n is to 1 in a counter (not shown) in controller 7 (S01). Voltage measurement section 10 measures voltage V₁ in the state (S02).

Then, main controller 71 allows flow rate controller 72 to increase a fuel flow rate by predetermined change amount X from first flow rate Q₁ (S03). Flow rate controller 72 determines whether or not the increased flow rate is not more than the preset upper limit value (S04). When the increased flow rate is not more than the upper limit value, the processing proceeds to S05. When the increased flow rate is more than the upper limit value, the processing proceeds to S17 in Fig. 4.

When the increased flow rate is not more than the upper limit value, voltage measurement section 10 measures voltage V₂ in the state (S05). Main controller 71 calculates voltage change ΔV_{X} at this time (S06). Then, main controller 71 determines whether or not voltage change ΔV_{X} exceeds predetermined change amount a (S07). When voltage change ΔV_{X} exceeds predetermined change amount a, main controller 71 counts up n to n+1 and the processing returns to S03 (S08). When voltage change ΔV_{X} is not more than change amount a, the processing proceeds to S09 in Fig. 4.

In this way, main controller 71 allows flow rate controller 72 to increase the fuel flow rate by X n times repeatedly until voltage change ΔV_{X} becomes not more than predetermined change amount a. Finally, the fuel flow rate is set to second flow rate Q₂ = Q₁ + nX (S09).

As shown in Fig. 5, in a region in which the fuel flow rate is small, when the fuel flow rate is increased by change amount X, a voltage is increased by voltage change ΔV_{X} accordingly. When the flow rate is increased to some extent, voltage change ΔV_{X} is being reduced, and ΔV_{X} becomes not more than predetermined change amount a. When the flow rate is further increased, since the voltage enters the saturation region, the flow rate at this time is once made to be a provisional optimum value (second flow rate Q₂). Control to this point corresponds to the processing shown by arrow A in Fig. 5.

However, when first flow rate Q₁ is large to some extent and X is large, there may be a possibility that the flow rate completely reaches a saturation region of voltage when n is 2. Then, further adjustment is carried out from second flow rate Q₂.

As shown in Fig. 4, main controller 71 sets m to 1 in a counter (not shown) (S09). Voltage measurement section 10 measures voltage Vₘ in the state (S10). This voltage value is denoted by V₃. Thereafter, main controller 71 allows flow rate controller 72 to reduce the fuel flow rate by predetermined change amount Y from second flow rate Q₂ (S11). Voltage measurement section 10 measures voltage Vₘ₊₁ in the state (S12). This voltage value is denoted by V₄.

Main controller 71 calculates voltage change ΔV_{Y} at this time (S13). Then, main controller 71 determines whether or not an absolute value of voltage change ΔV_{Y} exceeds predetermined change amount b (S14). When the absolute value of voltage change ΔV_{Y} exceeds predetermined change amount b, the processing proceeds to S16. When the absolute value of voltage change ΔV_{Y} is not more than predetermined change amount b, main controller 71 counts up m to m+1, and the processing returns to S11 (S15).

In this way, main controller 71 allows flow rate controller 72 to reduce the fuel flow rate m times repeatedly until the absolute value of voltage change ΔV_{Y} exceeds predetermined change amount b. Finally, the fuel flow rate is made to be third flow rate Q₃ = Q₁ + nX - mY (S16). Control to this point corresponds to the processing shown by arrow B in Fig. 5.

Finally, main controller 71 indicates flow rate controller 72 to supply fuel to fuel cell stack 1 at fourth flow rate Q₄ = Q₁ + nX - (m-1)Y that is increased from third flow rate Q3 by predetermined change amount Y (S16 and S17). Control to this point corresponds to the processing shown by arrow C in Fig. 5.

In this way, main controller 71 reduces the fuel flow rate by change amount Y from second flow rate Q₂. When the absolute value of voltage change ΔV_{Y} exceeds predetermined change amount b, main controller 71 judges that it is less than an inflection point in Fig. 5. Then, main controller 71 returns (increases) the flow rate by change amount Y. Thus, it is possible to adjust to minimize the flow rate by a voltage that is the same as in the saturation region. In this way, by obtaining an optimum point of the usage efficiency of fuel in real time at any time, the usage efficiency of fuel can be optimized according to the change of properties of fuel cell stack 1.

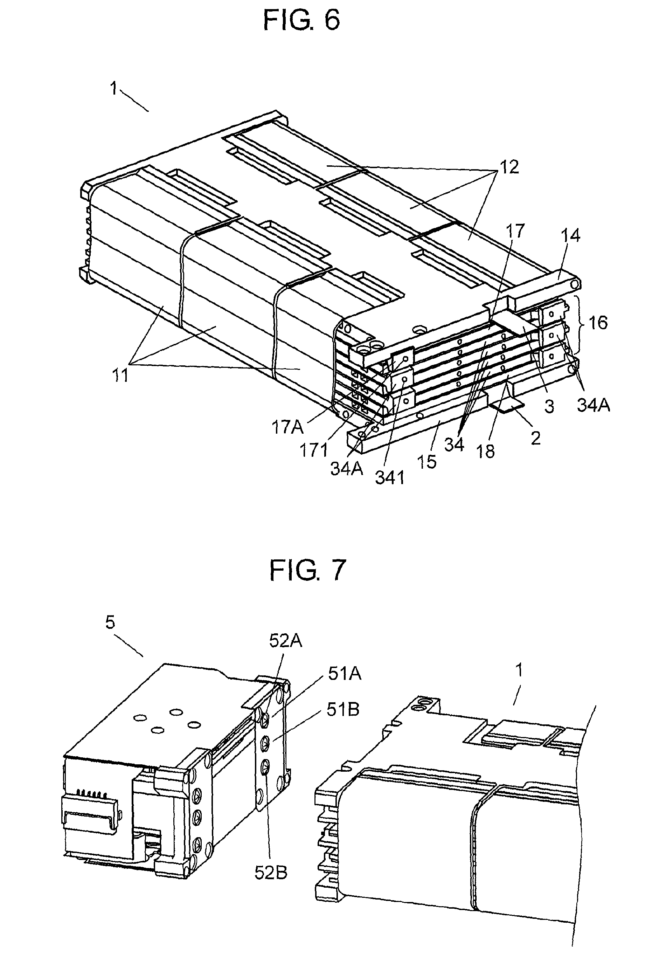

Next, a structure of fuel cell stack 1 and further preferable control of the fuel flow rate are described. Fig. 6 is a perspective view showing fuel cell stack 1. Fig. 7 is a perspective view illustrating the connection between fuel cell stack 1 and fuel pump 5. Fuel cell stack 1 shown in Fig. 6 shows a stack in which unit cells shown in Fig. 2 are connected in series.

As shown in Fig. 6, fuel cell stack 1 includes cell stack 16, backing plates 14 and 15, first plate spring 11 and second plate spring 12. Cell stack 16 includes MEAs 35 shown in Fig. 2, separators 34 disposed so as to sandwich MEAs 35, and a pair of end plates 17 and 18. End plates 17 and 18 sandwich MEAs 35 and separators 34 from both sides in the laminating direction of MEA 35, that is, from both sides in the laminating direction of MEAs 35 and separators 34.

End plates 17 and 18 and separator 34 are made of carbon materials or stainless steel. As shown in Fig. 2, fuel flow passage groove 34B for supplying fuel to anode electrode 31 is formed on a surface of separator 34 facing anode electrode 31. On the other hand, air flow passage groove 34D for supplying air to cathode electrode 32 is formed on a surface of separator 34 facing cathode electrode 32.

As shown in Fig. 6, on the outer side from MEA 35 on separator 34, plane portion (second plane portion) 34A is provided. That is to say, plane portion 34A is provided on a first side surface of cell stack 16, which is in parallel to the laminating direction and is not fastened by first plate spring 11 and second plate spring 12. The dimension in the laminating direction of plane portion 34A is larger than the thickness of separator 34 in a portion in which separators 34 sandwich MEA 35 or separator 34 and end plate 17 sandwich MEA 35. Plane portion 34A is provided with fuel inlet port (second fuel inlet port) 341 for taking in fuel from the outside. A through hole (not shown) is provided so as to allow fuel inlet port 341 to communicate with fuel flow passage groove 34B. On the other hand, on the second side surface parallel to the laminating direction of cell stack 16, gas inlet port (second gas inlet port) (not shown) for taking in air from the outside is provided. Also, the second side surface is not fastened by first plate spring 11 and second plate spring 12 and opposites the first side surface.

Note here that a fuel flow passage groove is provided also on anode side end plate 17 facing anode electrode 31, and a flow passage groove for supplying air is provided also on the cathode side end plate 18 facing cathode electrode 32. Furthermore, plane portion (first plane portion) 17A having fuel inlet port (first fuel inlet port) 171 is formed on end plate 17, and the above-mentioned fuel flow passage groove communicates with fuel inlet port 171 via a through hole (not shown). A gas inlet port (first gas inlet port, not shown) for taking in air from the outside is provided on the second side surface that is parallel to the laminating direction of cell stack 16.

Backing plate 14 is disposed at the anode electrode 31 side in cell stack 16, and backing plate 15 is disposed at the cathode electrode 32 side. Backing plates 14 and 15 are made of insulating resin, ceramic, resin containing a glass fiber, a metal plate coated with an electrically-insulating film, or the like.

First plate spring 11 and second plate spring 12 tighten cell stack 16 with the spring elastic force via backing plates 14 and 15. Second plate spring 12 is disposed so as to face first plate spring 11. First plate spring 11 and second plate spring 12 are made of, for example, a spring steel material.

In the exemplary embodiment, cell stack 16 is fastened by first plate spring 11 and second plate spring 12 via backing plates 14 and 15. First plate spring 11 and second plate spring 12 fasten cell stack 16 extremely compactly along the outer shape of cell stack 16 as shown in Fig. 6. That is to say, dead space is extremely small on the side surface of cell stack 16. Fuel cell stack 1 can be reduced in size as compared with a conventional case in which a cell stack is fastened by bolts and nuts.

Furthermore, when a cell stack is fastened by using bolts and nuts, a pressing point is provided at the outside of cell stack 16. However, first plate spring 11 and second plate spring 12 have a pressing point in a relatively central portion in cell stack 16. Therefore, pressing power operates on cell stack 16 uniformly in the planar direction of backing plates 14 and 15. With such a pressing power, entire cell stack 16 can be fastened uniformly. Thus, the electrochemical reactions expressed by the formulae (1) and (2) proceed uniformly in the planar direction of MEA 35. As a result, current-voltage characteristics of fuel cell stack 1 are improved.

Plane portions 17A and 34A are formed on the side surface to be connected to fuel pump 5. As shown in Fig. 7, fuel discharging section (first fuel discharging section) 51A is provided on a position in fuel pump 5, which corresponds to plane portion 17A, and fuel discharging section (second fuel discharging section) 51B is provided on a position corresponding to plane portion 34A. On fuel discharging section 51A, seal member (first seal member) 52A is disposed. Similarly, on fuel discharging section 51B, seal member (second seal member) 52B is disposed. Seal members 52A and 52B are formed smaller in size than plane portions 17A and 34A, respectively. Then, fuel inlet port 171 and fuel discharging section 51A are allowed to face each other, and fuel inlet port 341 and fuel discharging section 51B are allowed to face each other. Furthermore, fuel pump 5 and fuel cell stack 1 are fastened by, for example, a bolt so that seal members 52A and 52B are compressed by plane portions 17A and 34A. Thereby, a fuel passage is sealed.

With this structure, even when thin end plate 17 and separator 34 are used, the fuel cell stack can be connected to fuel pump 5 by securely sealing with the use of plane portions 17A and 34A. This makes it possible to prevent fuel from leaking at the connecting portion.

As shown in Fig. 6, it is preferable that plane portion 17A and plane portion 34A of separator 34 adjacent to end plate 17 are displaced from each other in the direction perpendicular to the laminating direction. Furthermore, when three or more MEAs 35 and two or more separators 34 are laminated, it is preferable that plane portions 34A are displaced from each other in the direction perpendicular to the laminating direction. In Fig. 6, plane portions 17A and 34A are alternately provided in laminating order. In such a position relation, plane portion 17A and plane portion 34A, or plane portions 34A are not brought into contact with each other. Therefore, it is possible to prevent a short circuit from occurring in cell stack 16. Furthermore, the degree of freedom in arranging fuel discharging sections 51A and 51B is obtained.

Furthermore, it is further preferable that plane portion 17A and plane portion 34A or plane portions 34A are provided on the same plane. By providing plane portion 17A and plane portion 34A on the same plane such that they are displaced from each other in the direction perpendicular to the laminating direction, fuel discharging sections 51A and 51B may be provided on the same plane. Thus, sealing of fuel discharging sections 51A and 51B can be carried out, reliably.

Furthermore, it is preferable that fuel pump 5 is capable of individually controlling the flow rates of fuel discharged from fuel discharging sections 51A and 51B, respectively. By using such a fuel pump 5, it is possible to supply fuel to each unit cell at an optimum flow rate. In a unit cell, since there is a variation in the electromotive force and/or the pressure loss of flow passage, it is preferable that the flow rate of the fuel can be controlled for each unit cell. That is to say, when fuel cell stack 1 in which a plurality of unit cells are connected in series is used, it is preferable that fuel pump 5 can control the fuel flow rate with respect to the plurality of unit cells separately. Then, it is preferable that main controller 71 makes an electric current output from fuel cell stack 1 be constant and that control operations shown in Figs. 3 and 4 are carried out with respect to each of a plurality of unit cells.

Unit cells connected in series are operated at an electric current value. By supplying a fuel cell at an optimum flow rate for each unit cell in this state, the usage efficiency of fuel (electricity generating efficiency) can be maximized for all unit cells. Furthermore, even if a unit cell having relatively low property exists in fuel cell stack 1, it is possible to suppress deterioration of generated power.

In this case, voltage measurement section 10 may measure a voltage of each unit cell to reflect it on controlling. Thus, the flow rate of fuel supplied to all unit cells can be optimized simultaneously for a relatively short time. On the other hand, voltage measurement section 10 may measure a voltage of entire fuel cell stack 1, and may optimize the flow rate of fuel supplied to each unit cell sequentially. In this case, it takes a rather long time to control the flow rate, but voltage detection can be simplified.

For example, when Q₁ of a unit cell is 0.20 cm³/min and X is 0.02 cm³/min, ΔV_{X} is about 0.1 V at maximum. Thus, when the voltage change amount is small as such, a detection error of a voltage tends to occur because of an instantaneous voltage change by accumulation and discharge of water which is a reaction product in a cathode electrode or a voltage change by disturbance. Therefore, by detecting voltage values at a plurality of times and averaging thereof, it is possible to reduce the effect of such a voltage change and detect ΔV_{X} appropriately.

### INDUSTRIAL APPLICABILITY

As mentioned above, according to a method for controlling a flow rate of fuel supplied to a fuel cell, a voltage change is examined while the fuel flow rate is increased step by step. Conversely, when the voltage change becomes small, the flow rate of fuel is reduced step by step. When the voltage change becomes large, a fuel flow rate in the previous step is employed. Thus, a fuel flow rate can be optimized. The present invention relates to a fuel supply device that achieves such a control, and a fuel cell system using the same. Such a control, a fuel supply device, and a fuel cell system are useful as a power source particularly in small-size electronic apparatuses.

### REFERENCE MARKS IN THE DRAWINGS

1 fuel cell stack
2 cathode terminal
3 anode terminal
4 fuel tank
5 fuel pump
6 air pump
7 controller
8 storage section
9 DC/DC converter
10 voltage measurement section
11 first plate spring
12 second plate spring
14, 15 backing plate
16 cell stack
17, 18 end plate
17A plane portion (first plane portion)
31 anode electrode
31A, 32A diffusion layer
31B, 32B microporous layer (MPL)
31C, 32C catalyst layer
32 cathode electrode
33 electrolyte membrane
34 separator
34A plane portion (second plane portion)
34B fuel flow passage groove
34D air flow passage groove
35 membrane electrode assembly (MEA)
51A fuel discharging section (first fuel discharging section)
51B fuel discharging section (second fuel discharging section)
52A seal member (first seal member)
52B seal member (second seal member)
71 main controller
72 flow rate controller
171 fuel port (first fuel port)
341 fuel port (second fuel port)

## Claims

1. A method for controlling a flow rate of fuel supplied to a fuel cell, the method comprising:
A) making an electric current output from the fuel cell constant;
B) supplying the fuel to the fuel cell at first flow rate Q₁, and measuring voltage V₁ of the fuel cell thereat;
C) increasing the flow rate of the fuel by predetermined change amount X from first flow rate Q₁, measuring voltage V₂ of the fuel cell thereat, and calculating voltage change ΔV_{X};
D) carrying out an operation of the C n times repeatedly until voltage change ΔV_{X} becomes not more than predetermined change amount a to make the flow rate of the fuel be second flow rate Q₁ + nX, and measuring voltage V₃ of the fuel cell thereat;
E) reducing the flow rate of the fuel by predetermined change amount Y from second flow rate Q₁ + nX, measuring voltage V₄ of the fuel cell thereat, and calculating voltage change ΔV_{Y};
F) carrying out an operation of the E m times repeatedly until an absolute value of voltage change ΔV_{Y} exceeds predetermined change amount b to reduce the flow rate of the fuel to third flow rate Q₁ + nX - mY; and
G) supplying the fuel to the fuel cell at fourth flow rate Q₁ + nX - (m-1)Y that is increased by predetermined change amount Y from a state of the F.

2. The method according to claim 1,
wherein the fuel cell is a stack in which a plurality of unit cells are connected in series, and
an electric current output from the fuel cell is made to be constant, and the operations from the B to G are carried out with respect to the plurality of unit cells respectively.

3. A fuel supply device for supplying fuel to a fuel cell, the fuel supply device comprising:
a fuel pump;
a flow rate controller configured to control a flow rate of fuel supplied to the fuel cell from the fuel pump;
a voltage measurement section configured to measure a voltage of the fuel cell; and
a main controller configured to keep an electric current output from the fuel cell constant, and control the flow rate controller based on an output voltage from the voltage measurement section,
wherein
B) the main controller controls the flow rate controller to supply the fuel to the fuel cell at first flow rate Q₁, and the voltage measurement section measures voltage V₁ of the fuel cell thereat;
C) after B, the main controller allows the flow rate controller to increase the flow rate of the fuel by predetermined change amount X from first flow rate Q₁, the voltage measurement section measures voltage V₂ of the fuel cell thereat, and the main controller calculates voltage change ΔV_{X};
D) the main controller allows the flow rate controller to increase the flow rate of the fuel by predetermined change amount X n times repeatedly until voltage change ΔV_{X} becomes not more than predetermined change amount a, so that the flow rate of the fuel is made to be second flow rate Q₁ + nX, and the voltage measurement section measures voltage V₃ of the fuel cell thereat;
E) the main controller allows the flow rate controller to reduce the flow rate of fuel by change amount Y from second flow rate Q₁ + nX, the voltage measurement section measures V₄ of the fuel cell thereat, and main controller calculates voltage change ΔV_{Y};
F) the main controller allows the flow rate controller to reduce the flow rate of the fuel m times repeatedly until an absolute value of voltage change ΔV_{Y} exceeds predetermined change amount b, so that the flow rate of the fuel is made to be third flow rate Q₁ + nX - mY; and
G) the main controller makes the flow rate controller to supply the fuel to the fuel cell at fourth flow rate Q₁ + nX - (m-1)Y that is increased by predetermined change amount Y.

4. The fuel supply device according to claim 3,
wherein the fuel cell is a stack in which a plurality of unit cells are connected in series, and
the fuel pump is capable of controlling a flow rate of fuel with respect to the plurality of unit cells individually, and
the main controller makes an electric current output from the fuel cell constant, and carries out operations from the B to G with respect to the plurality of unit cells.

5. A fuel cell system comprising:
a fuel cell; and
a fuel supply device of claim 3, which supplies the fuel to the fuel cell.

6. The fuel cell system according to claim 5,
wherein the fuel cell is a stack in which a plurality of unit cells are connected in series,
the fuel pump is capable of controlling a flow rate of fuel with respect to the plurality of unit cells individually, and
the main controller of the fuel supply device makes an electric current output from the fuel cell constant, and carries out operations from the B to G with respect to the plurality of unit cells.

## Amended claims

### Amended claims under Art. 19.1 PCT

1. A method for controlling a flow rate of fuel supplied to a fuel cell, the method comprising:
A) making an electric current output from the fuel cell constant;
B) supplying the fuel to the fuel cell at first flow rate Q₁, and measuring voltage V₁ of the fuel cell thereat;
C) increasing the flow rate of the fuel by predetermined change amount X from first flow rate Q₁, measuring voltage V₂ of the fuel cell thereat, and calculating voltage change ΔV_{X};
D) carrying out an operation of the C n times repeatedly until voltage change ΔV_{X} becomes not more than predetermined change amount a to make the flow rate of the fuel be second flow rate Q₁ + nX, and measuring voltage V₃ of the fuel cell thereat;
E) reducing the flow rate of the fuel by predetermined change amount Y from second flow rate Q₁ + nX, measuring voltage V₄ of the fuel cell thereat, and calculating voltage change ΔV_{Y};
F) carrying out an operation of the E m times repeatedly until an absolute value of voltage change ΔV_{Y} exceeds predetermined change amount b to reduce the flow rate of the fuel to third flow rate Q₁ + nX - mY; and
G) supplying the fuel to the fuel cell at fourth flow rate Q₁ + nX - (m-1)Y that is increased by predetermined change amount Y from a state of the F.

2. The method according to claim 1,
wherein the fuel cell is a stack in which a plurality of unit cells are connected in series, and
an electric current output from the fuel cell is made to be constant, and the operations from the B to G are carried out with respect to the plurality of unit cells respectively.

3. (Amended) A fuel supply device for supplying fuel to a fuel cell, the fuel supply device comprising:
a fuel pump;
a flow rate controller configured to control a flow rate of fuel supplied to the fuel cell from the fuel pump;
a voltage measurement section configured to measure a voltage of the fuel cell; and
a main controller configured to control the flow rate controller based on an output voltage from the voltage measurement section,
wherein
A) the main controller keeps an electric current output from the fuel cell constant;
B) the main controller controls the flow rate controller to supply the fuel to the fuel cell at first flow rate Q₁, and the voltage measurement section measures voltage V₁ of the fuel cell threat;
C) after B, the main controller allows the flow rate controller to increase the flow rate of the fuel by predetermined change amount X from first flow rate Q₁, the voltage measurement section measures voltage V₂ of the fuel cell thereat, and the main controller calculates voltage change ΔV_{X};
D) the main controller allows the flow rate controller to increase the flow rate of the fuel by predetermined change amount X n times repeatedly until voltage change ΔV_{X} becomes not more than predetermined change amount a, so that the flow rate of the fuel is made to be second flow rate Q₁ + nX, and the voltage measurement section measures voltage V₃ of the fuel cell thereat;
E) the main controller allows the flow rate controller to reduce the flow rate of fuel by change amount Y from second flow rate Q₁ + nX, the voltage measurement section measures V₄ of the fuel cell thereat, and main controller calculates voltage change ΔV_{Y};
F) the main controller allows the flow rate controller to reduce the flow rate of the fuel m times repeatedly until an absolute value of voltage change ΔV_{Y} exceeds predetermined change amount b, so that the flow rate of the fuel is made to be third flow rate Q₁ + nX - mY; and
G) the main controller makes the flow rate controller to supply the fuel to the fuel cell at fourth flow rate Q₁ + nX - (m-1)Y that is increased by predetermined change amount Y.

4. The fuel supply device according to claim 3,
wherein the fuel cell is a stack in which a plurality of unit cells are connected in series, and
the fuel pump is capable of controlling a flow rate of fuel with respect to the plurality of unit cells individually, and
the main controller makes an electric current output from the fuel cell constant, and carries out operations from the B to G with respect to the plurality of unit cells.

5. A fuel cell system comprising:
a fuel cell; and
a fuel supply device of claim 3, which supplies the fuel to the fuel cell.

6. The fuel cell system according to claim 5,
wherein the fuel cell is a stack in which a plurality of unit cells are connected in series,
the fuel pump is capable of controlling a flow rate of fuel with respect to the plurality of unit cells individually, and
the main controller of the fuel supply device makes an electric current output from the fuel cell constant, and carries out operations from the B to G with respect to the plurality of unit cells.
